# EUROPEAN PATENT SPECIFICATION

(11) **EP 4 234 983 B1**
(45) Date of publication and mention of the grant of the patent: **06.08.2025**
(21) Application number: 21928991.5
(22) Date of filing: 02.03.2021
(51) Int. Cl.: F16H 63/18, F16H 3/083

(54) **TRANSMISSION**
GETRIEBE
TRANSMISSION

(43) Date of publication of application: 30.08.2023
(73) Proprietor: Univance Corporation, Kosai-city, Shizuoka 431-0494 (JP)
(72) Inventor: KATO, Tadahiko, Kosai-City, Shizuoka 4310494 (JP); YAMAUCHI, Yoshihiro, Kosai-City, Shizuoka 4310494 (JP); NAKAJO, Yasumasa, Kosai-City, Shizuoka 4310494 (JP)
(74) Representative: Prüfer & Partner mbB Patentanwälte · Rechtsanwälte
(86) International application number: PCT/JP2021/007982
(87) International publication number: WO 2022/185415

(56) References cited:
- EP-A1- 3 327 305
- WO-A1-2020/250535
- WO-A1-2020/250535
- JP-A- 2015 140 893
- JP-A- 2015 140 893
- JP-A- 2020 133 827

## Description

### TECHNICAL FIELD

The present invention relates to a transmission that selectively couples gears arranged on a shaft to the shaft.

### BACKGROUND ART

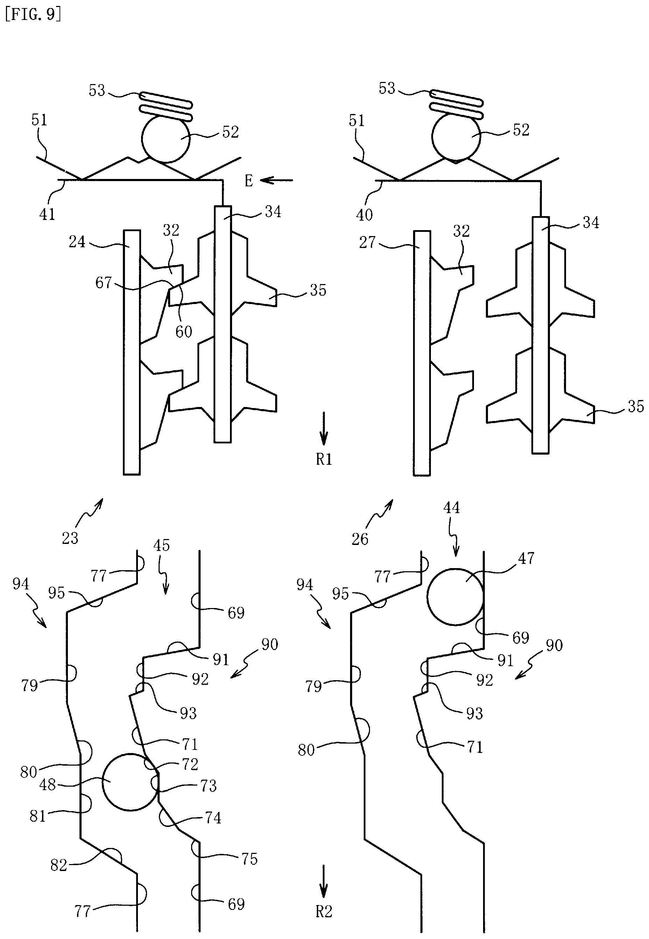

The transmission according to the known prior art (patent literature 1) includes a gear having a first tooth and a movable member having a second tooth both arranged on a shaft. The movable member is axially moved to engage the first tooth and the second tooth and selectively couple the gear to the shaft via the movable member. According to the prior art (see FIG. 9), the tooth root of the surface, where the drive torque of the second tooth acts, is inclined to generate a thrust force in the direction of disengagement. The surface where the coasting torque of the second tooth acts includes an engagement surface and a guide surface adjacent to the tooth tip side of the engagement surface. When the coasting torque acts, the engagement surface and the guide surface generate a thrust force in the direction of disengagement. An angle between the plane including the shaft and the guide surface is larger than an angle between the plane including the shaft and the engagement surface.

According to the prior art, an upshift causes the drive torque to act between the second and first teeth of an upper transmission. When a coasting torque acts between the guide surface of the second tooth and the first tooth of the lower transmission, the disengagement occurs due to a thrust force applied by the guide surface of the second tooth to the first tooth of the lower transmission, thus completing the upshift. During a downshift, an actuator is driven to axially move the movable member. The guide surface of the second tooth engages the first tooth of the lower transmission while keeping contact therebetween. The upper transmission disengages to complete the downshift. Further, patent literature 2 relates to a transmission and a meshing clutch. This transmission is characterized by comprising a meshing clutch that disengages when one shift level is connected by meshing and the connection is changed via simultaneous meshing to another shift level, a disengagement guide being provided to the tip of one or another meshing tooth, a movement mechanism being provided which generates axial force causing one rotating member 6 to move and cancels the axial force due to the generation of coast torque, biasing mechanisms being provided which bias the one rotating member with a force less than the axial force generated by the movement mechanism so that the meshing teeth mesh, contact bodies of the biasing mechanisms being disposed in support holes formed in a diameter direction in torque-transmitting members, and the contact bodies being provided with biasing conversion parts which receive the contact bodies biased in the diameter direction by the biasing mechanisms and convert the biasing direction to an axial direction to bias the rotating member to move in the axial direction. Patent literature 3 relates to a transmission comprising clutch rings movable to a state that engagement clutches are engaged with shift gears at a first engagement position in the axial direction, and to a state that the engagement clutches are engaged at a second engagement position for engagement shallower than the engagement at the first engagement position, the engagement clutches include guide faces for generating axial force in a disengaging direction on the clutch ring of a gear shift lower stage or a gear shift upper stage at the second engagement position, when the clutch rings of the gear shift lower stage and the gear shift upper stage are simultaneously engaged by operation of a gear shift operating portion, and further a mechanism for bringing the clutch ring of the gear shift lower stage or the gear shift upper stage into a state that the engagement clutch is engaged at the second engagement position when the clutch rings are simultaneously engaged.

### CITATION LIST

### PATENT LITERATURE

PATENT LITERATURE 1: JP 2020 133827 A
PATENT LITERATURE 2: WO 2020/250535 A1
PATENT LITERATURE 3: JP 2015 140893 A

### SUMMARY OF INVENTION

### TECHNICAL PROBLEMS

According to the prior art, the first and second teeth are disengaged while keeping contact with the guide surface of the lower transmission during an upshift. If there is a small angle formed between the plane including the shaft and the guide surface, the movable member hardly reduces the kinetic energy for the disengagement. Therefore, there is an increase in the mechanical strength needed for members used from the movable member to an engagement portion. There is an increase in the mechanical strength needed for a mechanism that immobilizes the disengaged movable member. An abnormal noise occurs when the movable member is immobilized. During a downshift, the first and second teeth engage while keeping contact with the guide surface of the lower transmission. If there is a large angle between the plane including the shaft and the guide surface, only a high-output actuator can move the movable member against a thrust force applied to the guide surface of the lower transmission. Therefore, the actuator needs to be large-sized.

The present invention has been made in consideration of the foregoing. It is therefore an object of the invention to provide a transmission capable of decreasing the necessary mechanical strength and abnormal noise and downsizing an actuator that moves a movable member.

### SOLUTION TO PROBLEM

To achieve the above-described object, according to the present invention there is provided a transmission according to claim 1.

Preferred embodiments of the present invention are laid down in the dependent claims.

### ADVANTAGEOUS EFFECTS OF INVENTION

According to a first aspect, a downshift operation engages the first tooth and the second tooth in contact with the fifth portion of the lower transmission. According to the present invention the angele θ2 between the plane including the axis of the shaft and the fifth portion is smaller than the angle θ3 between the plane and the fourth portion. It is possible to reduce the thrust force axially separating the gear and the movable member according to the coasting torque pressing the second face and the fourth face, compared to the case where the first tooth and the second tooth engage in contact with the fourth portion. Therefore, it is possible to downsize an actuator that moves the movable member during the downshift.

The second face and the fourth face include the fourth portion that couples the third and fifth portions. The fourth face hardly touches the second face when the lower transmission of the upshift disengages the first tooth and the second tooth that are engaged due to the drive torque. It is possible to prevent the axial speed of the disengaged movable member from increasing, reduce the mechanical strength required for the mechanism to stop the movable member, and reduce the noise occurring when the movable member stops.

According to a second aspect, the angle θ4 between the plane and the second portion is larger than the angles θ1 and θ2. It is possible to reduce a thrust force the third portion or the fifth portion applies to axially separate the second face and the fourth face when the coasting torque pressing the second face and the fourth face is applied. The coasting torque can be easily transmitted except for shift operations. Concerning the lower transmission for upshift, a small drive torque causes the second portion to supply the thrust force that axially separates the first face and the third face. It is possible to easily disengage the first and second teeth for the lower transmission.

According to a third aspect, the angles θ1 and θ2 are smaller than or equal to 20°. In addition to the effects of the first or second aspect, it is possible to further reduce the thrust force axially separating the gear and the movable member according to the coasting torque that presses the second face and the fourth face.

According to a fourth aspect, the angle θ3 is larger than or equal to 70° and smaller than or equal to 90°. It is possible to reduce the kinetic energy of the movable member when the lower transmission for upshift causes disengagement so that the teeth consequently touch the fourth portion.

### BRIEF DESCRIPTION OF DRAWINGS

FIG. 1 is a skeleton diagram illustrating a transmission according to a first embodiment;
FIG. 2 is a schematic diagram illustrating an idling gear and a movable member;
FIG. 3(a) is a schematic diagram illustrating the transmission to transmit a coasting torque, and FIG. 3(b) is a schematic diagram illustrating the transmission to transmit a drive torque;
FIG. 4 is a schematic diagram illustrating the transmission to transmit a coasting torque;
FIG. 5 is a schematic diagram illustrating the transmission in process of an upshift;
FIG. 6 is a schematic diagram illustrating the transmission when the upshift is complete;
FIG. 7 is a schematic diagram illustrating the transmission in process of a downshift;
FIG. 8 is a schematic diagram illustrating the transmission according to a second embodiment at the beginning of a downshift; and
FIG. 9 is a schematic diagram illustrating the transmission in process of a downshift.

### DESCRIPTION OF EMBODIMENTS

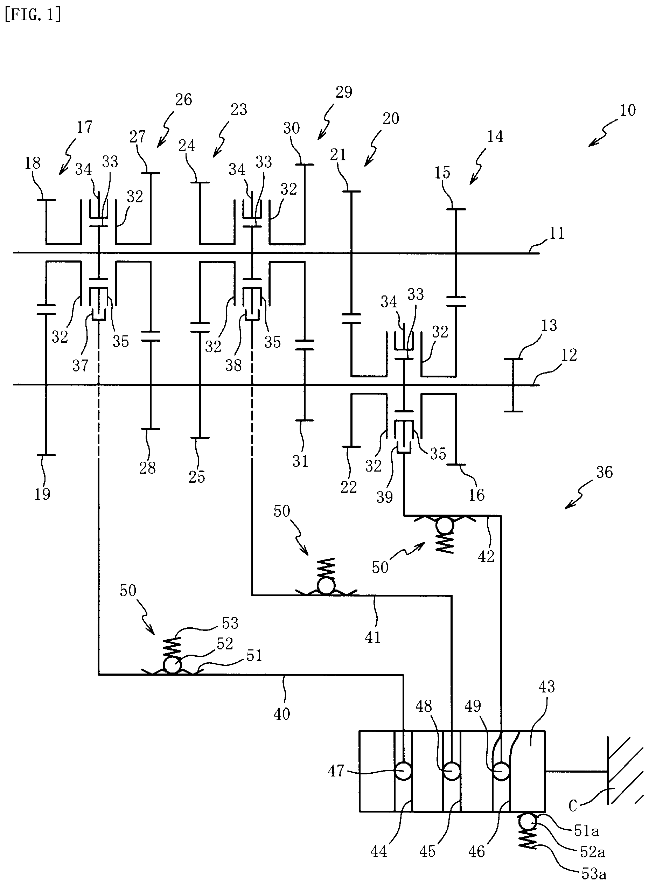

The description below explains preferred embodiments of the present invention by reference to the accompanying drawings. A schematic configuration of a transmission 10 according to the present invention will be described by reference to FIG. 1. FIG. 1 is a skeleton diagram illustrating the transmission 10 according to the first embodiment. The transmission 10 includes a drive shaft 11, where power is input, and a driven shaft 12 placed parallel to the drive shaft 11. An output gear 13 is placed on the driven shaft 12. The drive shaft 11 and the driven shaft 12 support multiple transmission gears such as a first gear 14, a second gear 17, a third gear 20, a fourth gear 23, a fifth gear 26, and a sixth gear 29. According to the present embodiment, the transmission 10 is mounted on an automobile (not shown).

The first gear 14 includes a fixed gear 15 and an idling gear 16. The fixed gear 15 is fixed to the drive shaft 11 to be incapable of relative rotation. The idling gear 16 is fixed to the driven shaft 12 to be capable of relative rotation while engaging with the fixed gear 15. The second gear 17 includes an idling gear 18 and a fixed gear 19. The idling gear 18 is fixed to the drive shaft 11 to be capable of relative rotation. The fixed gear 19 is fixed to the driven shaft 12 to be incapable of relative rotation while engaging with the idling gear 18. The third gear 20 includes a fixed gear 21 and an idling gear 22. The fixed gear 21 is fixed to the drive shaft 11 to be incapable of relative rotation. The idling gear 22 is fixed to the driven shaft 12 to be capable of relative rotation while engaging with the fixed gear 21.

The fourth gear 23 includes an idling gear 24 and a fixed gear 25. The idling gear 24 is fixed to the drive shaft 11 to be capable of relative rotation. The fixed gear 25 is fixed to the driven shaft 12 to be incapable of relative rotation while engaging with the idling gear 24. The fifth gear 26 includes an idling gear 27 and a fixed gear 28. The idling gear 27 is fixed to the drive shaft 11 to be capable of relative rotation. The fixed gear 28 is fixed to the driven shaft 12 to be incapable of relative rotation while engaging with the idling gear 27. The sixth gear 29 includes an idling gear 30 and a fixed gear 31. The idling gear 30 is fixed to the drive shaft 11 to be capable of relative rotation. The fixed gear 31 is fixed to the driven shaft 12 to be incapable of relative rotation while engaging with the idling gear 30.

The end face of each of the idling gears 16, 18, 22, 24, 27, and 30 is provided with an axially protruding first tooth 32. A hub 33 is provided axially adjacent to the first tooth 32 and is coupled to the drive shaft 11 and the driven shaft 12. A movable member 34 is placed on the outer periphery of the hub 33 to be incapable of rotation and capable of axial movement referring to the hub 33. The end face of the movable member 34 is provided with a second tooth 35 that circumferentially engages the first tooth 32. Suppose the movable member 34 moves axially, and the first tooth 32 provided for each of the idling gears 16, 18, 22, 24, 27, and 30 engages the second tooth 35 provided for the movable member 34. Then, any one of the idling gears 16, 18, 22, 24, 27, and 30 is selectively coupled to the drive shaft 11 or the driven shaft 12 via the movable member 34 and the hub 33.

A shift device 36 axially positions the movable member 34. The shift device 36 includes shift forks 37, 38, and 39, shift arms 40, 41, and 42, and a cylindrical shift drum 43. The shift forks 37, 38, and 39 engage the corresponding movable members 34. The shift arms 40, 41, and 42 are coupled to the shift forks 37, 38, and 39, respectively. The shift fork 37 engages the movable member 34 placed between the idling gear 18 and the idling gear 27. The shift fork 38 engages the movable member 34 placed between the idling gear 24 and the idling gear 30. The shift fork 39 engages the movable member 34 placed between the idling gear 16 and the idling gear 22.

The shift drum 43 is fixed to case C and is rotated around the shaft by an actuator (not shown) such as a motor. Cam grooves 44, 45, and 46 are provided on the outer circumference of the shift drum 43. An engagement portion 47 is coupled to the shift arm 40 and engages the cam groove 44. An engagement portion 48 is coupled to the shift arm 41 and engages the cam groove 45. An engagement portion 49 is coupled to the shift arm 42 and engages the cam groove 46.

The shift drum 43 rotates based on operation signals from a shift lever (not shown) or based on accelerator positions and vehicle speed signals caused by operations of an accelerator pedal (not shown). When the shift drum 43 (cylindrical cam) rotates, the shift forks 37, 38, and 39 move axially via the shift arms 40, 41, and 42 whose engagement portions 47, 48, and 49 are guided in the cam grooves 44, 45, and 46, respectively. As the shift forks 37, 38, and 39 move, the movable member 34 moves axially.

The shift device 36 includes a spring mechanism 50. According to the present embodiment, the spring mechanism 50 includes multiple recesses 51, a ball 52, and a spring 53. The recesses 51 are provided on the outer peripheries of the shift arms 40, 41, and 42. The ball 52 engages a recess 51. The spring 53 uses an elastic force to press the ball 52 against the recess 51. The recess 51 includes a pair of inclined surfaces that axially face each other.

The ball 52 is positioned at the bottom of the recess 51 when the movable member 34 is neutrally positioned and the second tooth 35 provided for the movable member 34 engages the first tooth 32 most deeply. The spring 53 axially applies force to the shift arms 40, 41, and 42 when the ball 52 climbs or climbs over the inclined surface of the recess 51. The spring mechanism 50 uses the elastic force of the spring 53 to assist in the axial positioning of the movable member 34 and disengagement between the first tooth 32 and the second tooth 35.

The spring mechanism 50 includes multiple recesses 51a, a ball 52a, and a spring 53a. The recesses 51a are provided on the outer periphery of the shift drum 43. The ball 52a engages the recess 51a. The spring 53a uses elastic force to press the ball 52a against the recess 51a. The recess 51a includes a pair of inclined surfaces facing each other in the rotation direction of the shift drum 43.

The ball 52a is positioned at the bottom of the recess 51a when the second tooth 35 provided for the movable member 34 engages the first tooth 32 most deeply. The spring 53a rotationally applies force to the shift drum 43 when the ball 52a climbs or climbs over the inclined surface of the recess 51a. The spring mechanism 50 uses the elastic force of the spring 53a to assist in the rotational positioning of the shift drum 43.

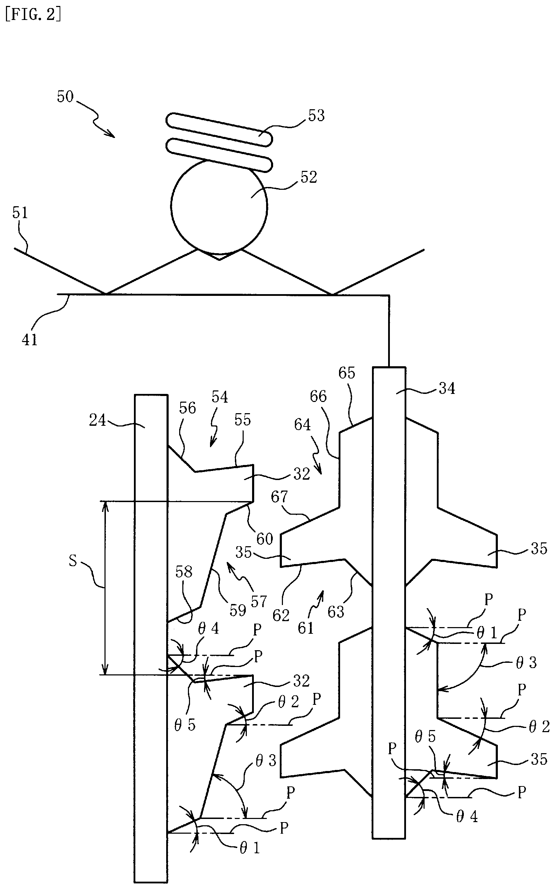

The description below explains the idling gear 24 and the movable member 34 by reference to FIG. 2. FIG. 2 is a schematic diagram illustrating the idling gear 24 and the movable member 34 provided for the drive shaft 11. FIG. 2 schematically illustrates the first tooth 32 and the second tooth 35 when the idling gear 24 and the movable member 34 are viewed in the direction perpendicular to the shaft. Similar to the idling gear 24, the idling gears 16, 18, 22, 24, 27, and 30 each include the first tooth 32. The description of the idling gear 24 represents and omits the description of the other idling gears 16, 18, 22, 27, and 30.

The idling gear 24 is externally circumferentially provided with a tooth (not shown) that engages the fixed gear 25. One end face of the idling gear 24 is provided with an axially protruding first tooth 32. The first teeth 32 are circumferentially provided at intervals around the central axis of the idling gear 24. The first tooth 32 has a first face 54 circumferentially facing one side and a second face 57 circumferentially facing the other side.

Both end faces of the movable member 34 are provided with axially protruding second teeth 35. The second teeth 35 are circumferentially provided at intervals around the central axis of the movable member 34. The second tooth 35 has a fourth face 64 circumferentially facing one side and a third face 61 circumferentially facing the other side. The third face 61 faces at least part of the first face 54 when the movable member 34 moves axially and the first tooth 32 and the second tooth 35 engage. The fourth face 64 faces at least part of the second face 57 when the movable member 34 moves axially and the first tooth 32 and the second tooth 35 engage.

The first face 54 includes a first portion 55 and a second portion 56. The first portion 55 transmits torque in the direction of pressing the first face 54 and the third face 61. The second portion 56 is adjacent to the first portion 55 toward the tooth root. The second portion 56 generates a thrust to axially separate the idling gear 24 and the movable member 34 according to the torque in the direction of pressing the first face 54 and the third face 61. The first portion 55 slopes to approach the second face 57 toward the tooth root. The second portion 56 slopes to recede from the second face 57 toward the tooth root.

The third face 61 includes a first portion 62 and a second portion 63. The first portion 62 transmits torque in the direction of pressing the first face 54 and the third face 61. The second portion 63 is adjacent to the first portion 62 toward the tooth root. The second portion 63 generates a thrust to axially separate the idling gear 24 and the movable member 34 according to the torque in the direction of pressing the first face 54 and the third face 61. The first portion 62 slopes to approach the fourth face 64 toward the tooth root. The second portion 63 slopes to recede from the fourth face 64 toward the tooth root. The first portions 55 and 62 transmit torque (drive torque) in the direction of pressing the first face 54 and the third face 61.

The second face 57 includes a third portion 58, a fourth portion 59, and a fifth portion 60. The fourth portion 59 is adjacent to the third portion 58 toward the tooth tip. The fifth portion 60 is adjacent to the fourth portion 59 toward the tooth tip. The third portion 58 and the fifth portion 60 slope to approach the first face 54 toward the tooth tip. The fourth portion 59 couples the third portion 58 and the fifth portion 60.

The fourth face 64 includes a third portion 65, a fourth portion 66, and a fifth portion 67. The fourth portion 66 is adjacent to the third portion 65 toward the tooth tip. The fifth portion 67 is adjacent to the fourth portion 66 toward the tooth tip. The third portion 65 and the fifth portion 67 slope to approach the third face 61 toward the tooth tip. The fourth portion 66 couples the third portion 65 and the fifth portion 67. The third portions 58 and 65 and the fifth portions 60 and 67 generate a thrust to axially separate the idling gear 24 and the movable member 34 according to the torque (coasting torque) in the direction of pressing the second face 57 and the fourth face 64.

Referring to the first tooth 32, angle θ1 is formed between plane P including the drive shaft 11 (central axis of the idling gear 24) and the third portion 58. Angle θ2 is formed between plane P and the fifth portion 60. Angle θ2 is smaller than angle θ3 between plane P and the fourth portion 59. Angle θ4 is formed between plane P and the second portion 56 and is smaller than angle θ3 between plane P and the fourth portion 59. According to the present embodiment, angle θ5 is formed between plane P and the first portion 55 and satisfies θ5 > 0°. The axial length of the second portion 56 or 63 is equal to the axial length of the third portion 58 or is shorter than the axial length of the third portion 58.

Referring to the second tooth 35, angle θ1 is formed between plane P including the drive shaft 11 (central axis of the movable member 34) and the third portion 65. Angle θ2 is formed between plane P and the fifth portion 67. Angles θ1 and θ2 are each smaller than angle θ3 between plane P and the fourth portion 66. Angle θ4 is formed between plane P and the second portion 63 and is smaller than angle θ3 between plane P and the fourth portion 66. According to the present embodiment, angle θ5 between plane P and the first portion 62 satisfies θ5 > 0°.

Referring to the first tooth 32 and the second tooth 35, angles θ1 and θ2 are each advantageously set to 20° or smaller, namely, the angle that does not cause locking due to a frictional force. It is advantageous to be θ1 < θ3 ≤ 90°. Angle θ3 between plane P and the fourth portion 59 may or may not be equal to angle θ3 between plane P and the fourth portion 66. It is advantageous to be θ4 > θ1 and θ4 > θ2. It is advantageous to be 70° ≤ θ3 ≤ 90°.

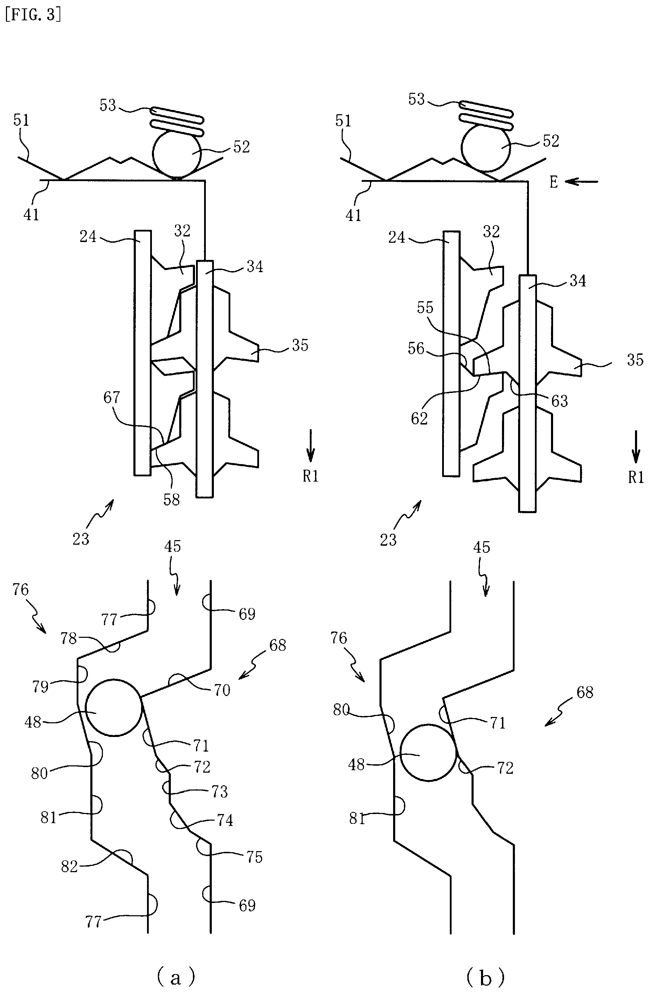

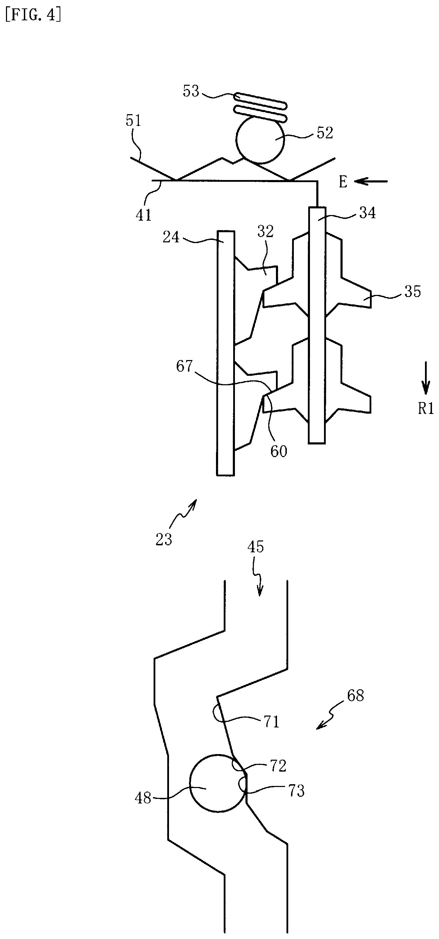

The description below explains operations of the transmission 10 by reference to FIGS. 3 through 7. FIG. 3(a) is a schematic diagram illustrating the transmission 10 to transmit a coasting torque for the fourth gear 23. FIG. 3(b) is a schematic diagram illustrating the transmission 10 to transmit a drive torque for the fourth gear 23. In the drawing, the movable member 34 and the idling gear 24 rotate downward (in the direction of arrow R1). The same applies to FIGS. 4 to 9.

As illustrated in FIG. 3(a), the engagement portion 48 engages the cam groove 45 of the shift drum 43 (see FIG. 1). When the shift drum 43 rotates, the first cam 68 and the second cam 76 provided inside the cam groove 45 axially position the engagement portion 48 and the shift arm 41. The first cam 68 axially faces the second cam 76. The first cam 68 moves the engagement portion 48 in a first axial direction so that the first tooth 32 and the second tooth 35 engage. The second cam 76 moves the engagement portion 48 in a second axial direction so that the first tooth 32 and the second tooth 35 are disengaged. A pressure angle is formed between the axis of the shift drum 43 coinciding with the motion direction of the engagement portion 48 and the normal of the cam. The pressure angle of the first cam 68 and the pressure angle of the second cam 76 are independent of each facing counterpart.

The first cam 68 continuously includes the first plane 69, a first slope 70, a second slope 71, a third slope 72, a second plane 73, a fourth slope 74, a fifth slope 75, and the first plane 69 in order. The first slope 70, the second slope 71, the third slope 72, the second plane 73, the fourth slope 74, and the fifth slope 75 project axially from the first plane 69. The first slope 70 faces opposite to the second slope 71, the third slope 72, the fourth slope 74, and the fifth slope 75, referring to the rotation direction.

Pressure angles of the first plane 69 and the second plane 73 are larger than a friction angle, for example. The friction angle is equal to the tangent of a static friction coefficient between the cam and the engagement portion 48. The pressure angles of the first plane 69 and the second plane 73 are smaller than those of the first slope 70, the second slope 71, the third slope 72, and the fourth slope 74. The pressure angle of the first slope 70 is larger than that of the second slope 71, the third slope 72, and the fourth slope 74. The pressure angle of the fifth slope 75 is larger than that of the second slope 71, the third slope 72, and the fourth slope 74. The pressure angle of the second slope 71 is larger than an angle that does not cause the engagement portion 48 to lock due to a frictional force of the engagement portion 48 acting on the second slope 71. The pressure angle of the second slope 71 is smaller than or equal to an angle that causes the engagement portion 48 to rest on the second slope 71 when a coasting torque is applied. The pressure angle of the second slope 71 ranges from 8° to 20°, for example.

The second cam 76 continuously includes the third plane 77, a sixth slope 78, a fourth plane 79, a seventh slope 80, a fifth plane 81, an eighth slope 82, and the third plane 77 in order. The sixth slope 78, the fourth plane 79, the seventh slope 80, the fifth plane 81, and the eighth slope 82 are axially depressed referring to the third plane 77. The sixth slope 78 faces opposite to the seventh slope 80 and the eighth slope 82, referring to the rotation direction. The pressure angles of the third plane 77, the fourth plane 79, and the fifth plane 81 are larger than the friction angle, for example. The pressure angles of the third plane 77, the fourth plane 79, and the fifth plane 81 are smaller than those of the sixth slope 78, the seventh slope 80, and the eighth slope 82. The pressure angles of the sixth slope 78 and the eighth slope 82 are larger than the pressure angle of the seventh slope 80. The pressure angles of the sixth slope 78 and the eighth slope 82 are larger than those of the second slope 71, the third slope 72, and the fourth slope 74.

The first plane 69 and the third plane 77 position the engagement portion 48 at a neutral position where the first tooth 32 and the second tooth 35 do not engage. The third plane 77 and the sixth slope 78 are located axially referring to the first plane 69. The fourth plane 79 is located axially referring to the first slope 70. The seventh slope 80 is located axially referring to the second slope 71. The fifth plane 81 is located axially referring to the third slope 72, the second plane 73, and the fourth slope 74. The eighth slope 82 is located axially referring to the fifth slope 75 and the first plane 69.

As illustrated in FIG. 3(a), the first tooth 32 and the second tooth 35 engage. The fifth portion 67 of the second tooth 35 is pressed against the third portion 58 of the first tooth 32 to transmit coasting torque from the idling gear 24 to the movable member 34. At this time, the engagement portion 48 touches the second slope 71. The third portion 58 of the first tooth 32 and the fifth portion 67 of the second tooth 35, pressed by the coasting torque, generate a thrust force that axially separates the idling gear 24 and the movable member 34. The axial thrust generated by the third portion 58 and fifth portion 67 due to the coasting torque is generally smaller than the axial force the spring mechanism 50 applies to the shift arm 41. Therefore, the shift arm 41 does not move axially and maintains engagement between the first tooth 32 and the second tooth 35 while the engagement portion 48 coupled to the shift arm 41 remains in contact with the second slope 71.

The axial force by the spring mechanism 50 applied to the shift arm 41 signifies the force of the spring 53 and the spring 53a. The force of the spring 53 acts on the shift arm 41 to resist the thrust force that axially separates the idling gear 24 and the movable member 34. The force of the spring 53a acts on the shift arm 41 to resist the force that is generated on the slope of the first cam 68 via the engagement portion 48 to rotate the shift drum 43.

Under the condition of θ4 > θ1 and θ4 > θ2, suppose that the coasting torque is applied to press the second face 57 and fourth face 64. Then, it is possible to reduce the thrust force that causes the third portion 58 or 65 and the fifth portion 60 or 67 to axially separate the second face 57 and the fourth face 64. The coasting torque can be easily transmitted except for shifting.

As illustrated in FIG. 3(a), the third face 61 of the second tooth 35 is pressed against the first face 54 of the first tooth 32 (see FIG. 2) to transmit drive torque from the movable member 34 to the idling gear 24. The second tooth 35 touches the second portion 56 of the first tooth 32 or the first tooth 32 touches the second portion 63 of the second tooth 35. Then, a thrust force is generated to axially separate the idling gear 24 and the movable member 34. The axial thrust force generated by the drive torque and applied to the second portions 56 and 63 may be larger than axial force E the spring mechanism 50 applies to the shift arm 41. In this case, the movable member 34 and the shift arm 41 move axially.

Under the condition of θ4 > θ1 and θ4 > θ2, a thrust force is generated so that a small drive torque can allow the second portions 56 and 63 to axially separate the first face 54 and third face 61. Therefore, the lower transmission for the upshift can easily disengage the first tooth 32 and the second tooth 35.

A contact between the first portion 55 of the first tooth 32 and the first portion 62 of the second tooth 35 does not generate thrust force that axially separates the idling gear 24 and the movable member 34. The spring mechanism 50 applies axial force E to the movable member 34 to maintain the engagement between the first tooth 32 and the second tooth 35. The engagement between the first tooth 32 and the second tooth 35 is maintained by the friction between the first portion 55 and the first portion 62 or axial force E from the spring mechanism 50, for example.

The engagement portion 48 coupled to the shift arm 41 applies a force to the second slope 71 of the first cam 68 according to the axial movement of the movable member 34 and the shift arm 41 due to the thrust force that axially separates the idling gear 24 and the movable member 34. The pressure angle of the second slope 71 applies a rotational force to the shift drum 43 (see FIG. 1). The pressure angle of the second slope 71 is configured so that this force does not stop the engagement portion 48. The shift drum 43 rotates while the engagement portion 48 touches the second slope 71. The shift drum 43 stops at a position that balances with the rotational force the spring mechanism 50 applies to the shift drum 43.

The axial force applied to the shift arm 41 by the spring mechanism 50 causes the engagement portion 48 to touch the first cam 68 even when coasting torque or drive torque is transmitted between the first tooth 32 and the second tooth 35 except during shifting operation. Therefore, it is possible to reduce the impact caused by the engagement portion 48 hitting the first cam 68 or the second cam 76 during switching between the transmission of the coasting torque and the transmission of the drive torque.

The shift drum 43 stops when the coasting torque is transmitted between the first tooth 32 and the second tooth 35, maintaining the engagement between the third portions 58 and 67. The condition of θ1 < θ3 can reduce the axial thrust force applied by the third portions 58 and 67.

FIG. 4 is a schematic diagram illustrating the transmission 10 to transmit a coasting torque. An excessive coasting torque may be applied when the fifth portion 67 of the second tooth 35 is pressed against the third portion 58 of the first tooth 32 and coasting torque is transmitted from the idling gear 24 to the movable member 34 (see FIG. 3(a)). In such a case, the first tooth 32 and the second tooth 35 may be disengaged due to the thrust force axially separating the idling gear 24 and the movable member 34 caused by the third portion 58 and the fifth portion 67. The first cam 68 includes the second plane 73 that axially positions the engagement portion 48 when the fifth portion 60 of the first tooth 32 engages the fifth portion 67 of the second tooth 35. The second plane 73 is located between the third slope 72 and the fourth slope 74 axially tilting down toward the first plane 69.

The pressure angle of the second plane 73 may be almost 0°. In this case, almost no rotational force is applied to the shift drum 43 (see FIG. 1) even if the engagement portion 48 coupled to the shift arm 41 applies an axial force to the second plane 73. Even if the third portion 58 of the first tooth 32 and the fifth portion 67 of the second tooth 35 are disengaged, the second plane 73 of the first cam 68 can maintain engagement between the fifth portion 60 of the first tooth 32 and the fifth portion 67 of the second tooth 35, making it possible to transmit excessive coasting torque.

When the pressure angle of the second plane 73 is larger than or equal to the friction angle, the axial force applied by the engagement portion 48 to the second plane 73 generates a rotational force on the shift drum 43. However, an increase in the axial distance between the idling gear 24 and the movable member 34 increases the axial force the spring mechanism 50 applies to the shift arm 41, making it possible to maintain the engagement between the first tooth 32 and the second tooth 35. Therefore, the coasting torque can be transmitted.

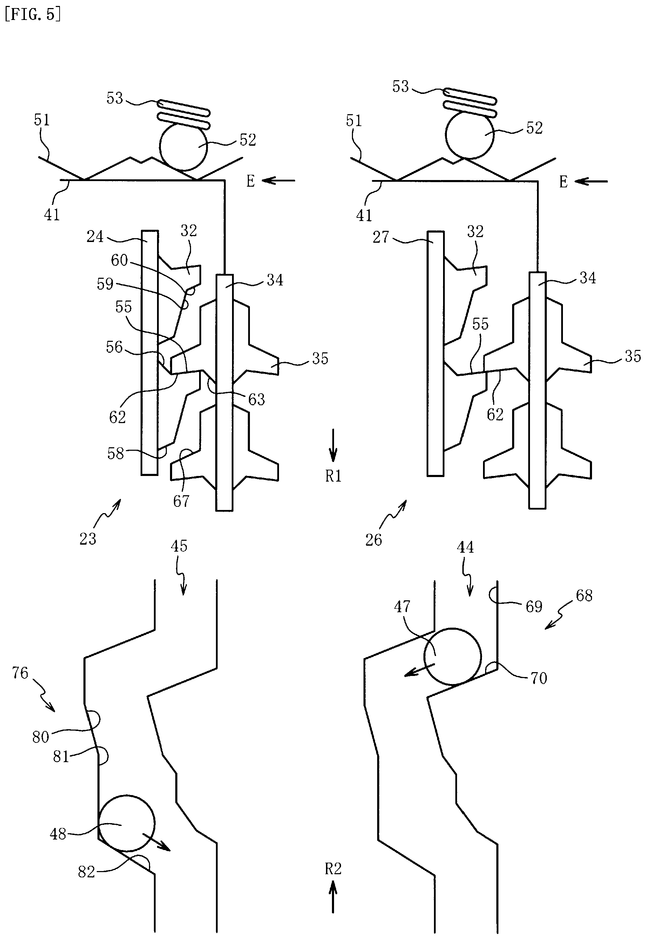

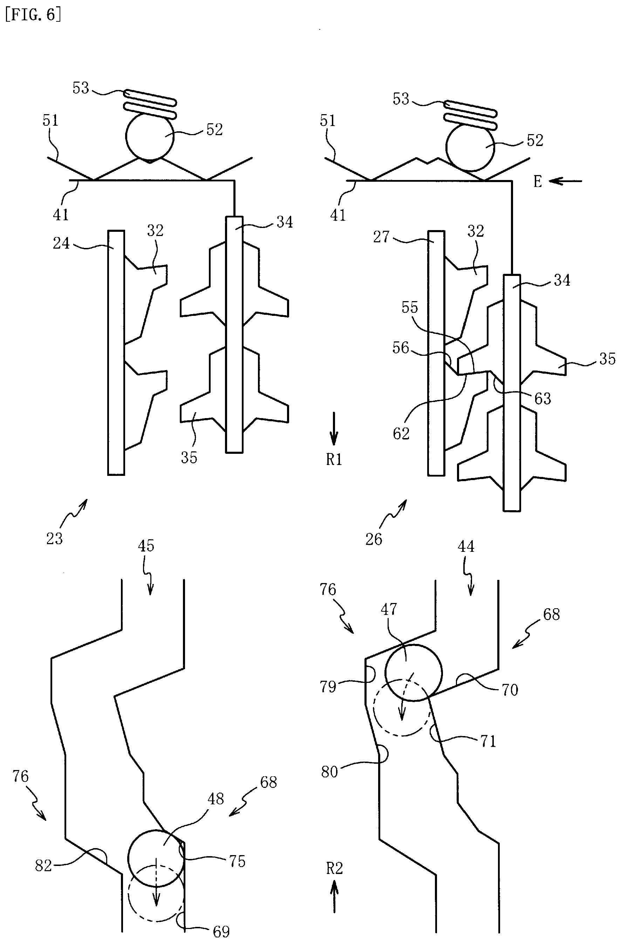

The description below explains the upshift operations of the transmission 10 by reference to FIGS. 5 and 6. As an example, the upshift operations from the fourth gear 23 to the fifth gear 26 will be described. Similar transmission operations apply to the other gears and a description of upshift operations for the other gears will be omitted.

FIG. 5 is a schematic diagram illustrating the transmission 10 in process of an upshift from the fourth gear 23 to the fifth gear 26. FIG. 6 is a schematic diagram illustrating the transmission 10 when the upshift to the fifth gear 26 is complete. Arrow R2 in FIG. 5 indicates the rotation direction of the shift drum 43 (see FIG. 1). The same applies to FIGS. 6 to 9. Concerning the fifth gear 26, rotation of the shift drum 43 causes the movable member 34 to axially move via the shift arm 40 having the engagement portion 47 guided in the cam groove 44. Like the cam groove 45, the cam groove 44 is provided with the first cam 68 and the second cam 76.

Concerning the fourth gear 23 as illustrated in FIG. 5, rotation of the shift drum 43 causes the engagement portion 48 to move from the seventh slope 80 to the fifth plane 81. The movable member 34 axially separates from the idling gear 24 against axial force E of the spring mechanism 50. Consequently, the first portion 55 of the first tooth 32 touches the first portion 62 of the second tooth 35 to transmit the drive torque. The spring mechanism 50 applies axial force E to the movable member 34. Axial force E maintains the engagement between the first tooth 32 and the second tooth 35.

Concerning the fifth gear 26, the shift drum 43 rotates from the neutral position where the first tooth 32 of the idling gear 27 and the second tooth 35 of the movable member 34 do not engage. Then, the engagement portion 47 in contact with the first plane 69 is pushed by the first slope 70 to move axially. The movable member 34 approaches the idling gear 27 as the engagement portion 47 moves. The pressure angle of the first slope 70 is larger than the pressure angles of the second slope 71, the third slope 72, and the fourth slope 74 of the first cam 68. The first tooth 32 and the second tooth 35 can engage quickly in response to the rotation of the shift drum 43.

The first tooth 32 and the second tooth 35 of the fifth gear 26 may be engaged while the first tooth 32 and the second tooth 35 of the fourth gear 23 are engaged. Then, the fourth gear 23 enters the coasting state, and the fifth gear 26 enters the driving state according to the gear ratios. The fifth gear 26 causes the first portion 55 of the first tooth 32 to touch the first portion 62 of the second tooth 35, avoiding a thrust force that axially separates the idling gear 27 and the movable member 34. Therefore, further rotation of the shift drum 43 presses the engagement portion 47 against the first slope 70 of the first cam 68. The movable member 34 further approaches the idling gear 27. The first tooth 32 and the second tooth 35 engage fast and deep.

Suppose the driving torque changes to the coasting torque between the first tooth 32 and the second tooth 35 of the fourth gear 23. Then, the engagement between the first portion 55 of the first tooth 32 and the first portion 62 of the second tooth 35 changes to the engagement between the fourth portion 59 of the first tooth 32 and the second tooth 35. A thrust force is generated to axially separate the idling gear 24 and the movable member 34. Because of θ3 > θ1, the second portion 56 can reduce the kinetic energy of the members used from the axially moving movable member 34 to the engagement portion 48. Therefore, it is possible to reduce a shock or an abnormal noise occurring on the shift device 36.

Concerning the fourth gear 23, the rotation of the shift drum 43 presses the engagement portion 48 against the eighth slope 82 of the second cam 76. The movable member 34 is axially separated from the idling gear 24 to disengage the first tooth 32 and the second tooth 35. The pressure angle of the eighth slope 82 is larger than the pressure angles of the second slope 71, the third slope 72, and the fourth slope 74 of the first cam 68. Therefore, the second tooth 35 can be quickly separated from the first tooth 32 in response to the rotation of the shift drum 43.

FIG. 6 illustrates the completion of the upshift. The engagement portion 48 of the fourth gear 23 touches the first plane 69 of the first cam 68. The engagement portion 47 of the fifth gear 26 is located between the second slope 71 and the seventh slope 80.

Concerning the fourth gear 23, the first portion 55 of the first tooth 32 may touch the first portion 62 of the second tooth 35 (see FIG. 5). In this state, a circumferential gap is generated between the third portion 58 of the first tooth and the fifth portion 67 of the second tooth 35. The contact between the first portion 55 of the first tooth 32 and the first portion 62 of the second tooth 35 disengages the first tooth 32 and the second tooth 35. The pressure angle of the eighth slope 82 and circumferential distance S (see FIG. 2) between the first portion 55 and the fifth portion 60 of the adjacent first teeth 32 are configured so that the movement of the second cam 76 causes the movable member 34 to move faster than the fourth face 64 of the second tooth 35 touches the second face 57 of the first tooth 32. The tooth tip of the second tooth 35 can be prevented from coming into contact with the first tooth 32 when the first tooth 32 and the second tooth 35 disengage. It is possible to reduce wear on the second face 57 of the first tooth 32 or the tooth tip of the second tooth 35.

The second face 57 can prevent the axial velocity of the movable member 34 from increasing, compared to the case where the thrust force generated on the second face 57 is used to disengage the second tooth 35. It is possible to reduce the kinetic energy of the members used from the movable member 34 to the engagement portion 48. It is possible to reduce the mechanical strength required for the members used from the movable member 34 to the engagement portion 48 and the mechanical strength required for the mechanism to stop the movable member 34. Consequently, it is possible to reduce an abnormal noise occurring when the movable member 34 stops.

Concerning the fourth gear 23, the second tooth 35 separates from the first tooth 32 without allowing the second tooth 35 to touch the fourth portion 59 and the fifth portion 60 of the first tooth 32 when the first tooth 32 and the second tooth 35 disengage. To do this, it is necessary to determine the circumferential lengths of the fourth portions 59 and 66, the axial height of the first tooth 32 from the tooth root to the tooth tip, and the circumferential length of the second tooth 35 from the first portion 62 to the fifth portion 67 in consideration of the pressure angle of the second cam 76 to axially separate the second tooth 35 from the first tooth 32, the rotational speed of the shift drum 43, the number of revolutions of the first tooth 32, and an elastic force of the spring acting on the movable member 34 to axially separate the second tooth 35 from the first tooth 32, for example. For this purpose, distance S can be ensured because the first tooth 32 and the second tooth 35 include the fourth portions 59 and 66.

Angle θ3 is favorably set to be larger than or equal to 70° and smaller than or equal to 90° when the lower transmission (fourth gear 23) for upshift disengages the first tooth 32 and the second tooth 35 to touch the fourth portions 59 and 66. This is because the kinetic energy of the movable member 34 can be reduced to prevent the axial speed of the movable member 34 from increasing during disengagement.

Concerning the fourth gear 23, the engagement portion 48 touches the first cam 68 when the direction of the torque acting between the second tooth 35 and the first tooth 32 changes (see FIGS. 3(a) and 3(b)). It is possible to control the initial speed of the movable member 34 when the first tooth 32 and the second tooth 35 disengage, compared to the prior art that leaves a gap between the first cam 68 and the second cam 76 to allow the engagement portion 48 to move axially. Consequently, it is possible to control the kinetic energy of the members used from the movable member 34 to the engagement portion 48. It is possible to decrease the mechanical strength required for the members used from the movable member 34 to the engagement portion 48 and the mechanical strength required for the mechanism that stops the disengaged movable member 34.

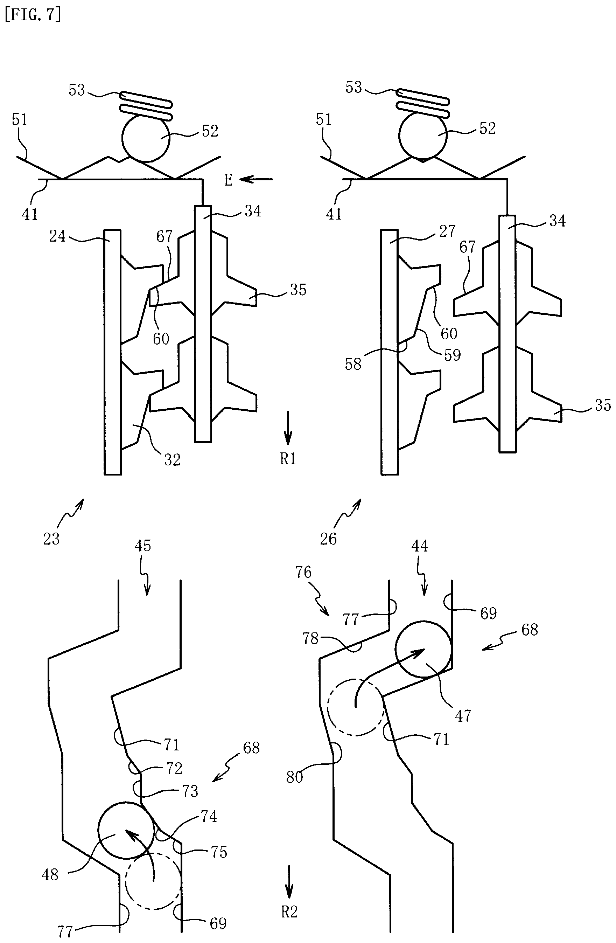

Downshift operations of the transmission 10 will be described by reference to FIGS. 6 and 7. As an example, a downshift operation from the fifth gear 26 to the fourth gear 23 will be described. Similar transmission operations apply to the other gears and a description of downshift operations for the other gears will be omitted. FIG. 7 is a schematic diagram illustrating the transmission 10 in process of a downshift from the fifth gear 26 to the fourth gear 23.

Concerning the fifth gear 26 as illustrated in FIG. 6, the first tooth 32 and the second tooth 35 engage, and the drive torque presses the first portion 55 of the first tooth 32 and the first portion 62 of the second tooth 35. As illustrated in FIG. 7, the shift drum 43 rotates for the downshift to the fourth gear 23. The engagement portion 48 of the fourth gear 23, having been in contact with the first plane 69 at the neutral position, is pushed in the order of the fifth slope 75 and the fourth slope 74 to move axially. As the engagement portion 48 moves axially, the movable member 34 approaches the idling gear 24. The pressure angle of the fifth slope 75 is larger than the pressure angle of the fourth slope 74. As the shift drum 43 rotates, the fifth slope 75 enables the first tooth 32 and the second tooth 35 to fast approach each other.

The engagement portion 48 is pushed toward the fourth slope 74 and the movable member 34 approaches the idling gear 24. Concerning the fourth gear 23, the first tooth 32 and the second tooth 35 start engaging while the fifth portion 67 of the second tooth 35 touches the fifth portion 60 of the first tooth 32. Angle θ2 between plane P (see FIG. 2) and the fifth portion 60 or 67 is smaller than angle θ3 between plane P and the fourth portion 59 or 66. It is possible to reduce the thrust force that prevents the movable member 34 from approaching, compared to the case where the first tooth 32 and the second tooth 35 start engaging while the fourth portions 59 and 66 are in contact with each other. Even a small output from the actuator (not shown) to rotate the shift drum 43 can axially move the engagement portion 48 against the thrust force that prevents the engagement. The actuator can be downsized.

Concerning the first cam 68, the pressure angle of the fourth slope 74 is smaller than that of the fifth slope 75. As the shift drum 43 rotates, the fourth slope 74 axially moves the engagement portion 48 to engage the first tooth 32 and the second tooth 35 of the fourth gear 23. It is possible to increase the axial force the first cam 68 applies to the engagement portion 48, compared to the case where the fifth slope 75 axially moves the engagement portion 48. This makes it possible to deeply engage the first tooth 32 and the second tooth 35 against the thrust force that prevents the engagement between the first tooth 32 and the second tooth 35.

Concerning the fifth gear 26, the rotation of the shift drum 43 presses the engagement portion 47 against the sixth slope 78 of the second cam 76. The shift arm 40 and the movable member 34 move axially. The first tooth 32 and the second tooth 35 are thereby disengaged. The pressure angle of the sixth slope 78 is larger than that of the fourth slope 74. Therefore, the first tooth 32 and the second tooth 35 can fast disengage as the shift drum 43 rotates.

The first cam 68 and the second cam 76 are provided to engage the first tooth 32 and the second tooth 35 of the fourth gear 23 (lower transmission) when the first tooth 32 and the second tooth 35 of the fifth gear 26 (upper transmission) disengage as the shift drum 43 rotates. Therefore, a seamless downshift is available.

The pressure angle of the second plane 73 of the first cam 68 is smaller than that of the third slope 72 or the fourth slope 74 of the first cam 68. Therefore, the first tooth 32 and the second tooth 35 can deeply engage without zeroing the transmission torque when the shift drum 43 further rotates so that the fourth gear 23 causes contact between the fourth portions 59 and 66 each having a large angle θ3. It is possible to prevent a loss of the lower transmission torque.

Concerning the fourth gear 23, further rotation of the shift drum 43 presses the engagement portion 48 against the third slope 72. The tooth tip of the second tooth 35 axially reaches the fourth portion 59 of the first tooth 32. Further rotation of the shift drum 43 presses the engagement portion 48 against the second slope 71. The tooth tip of the second tooth 35 axially reaches the third portion 58 of the first tooth 32. Consequently, the first tooth 32 and the second tooth 35 engage more deeply.

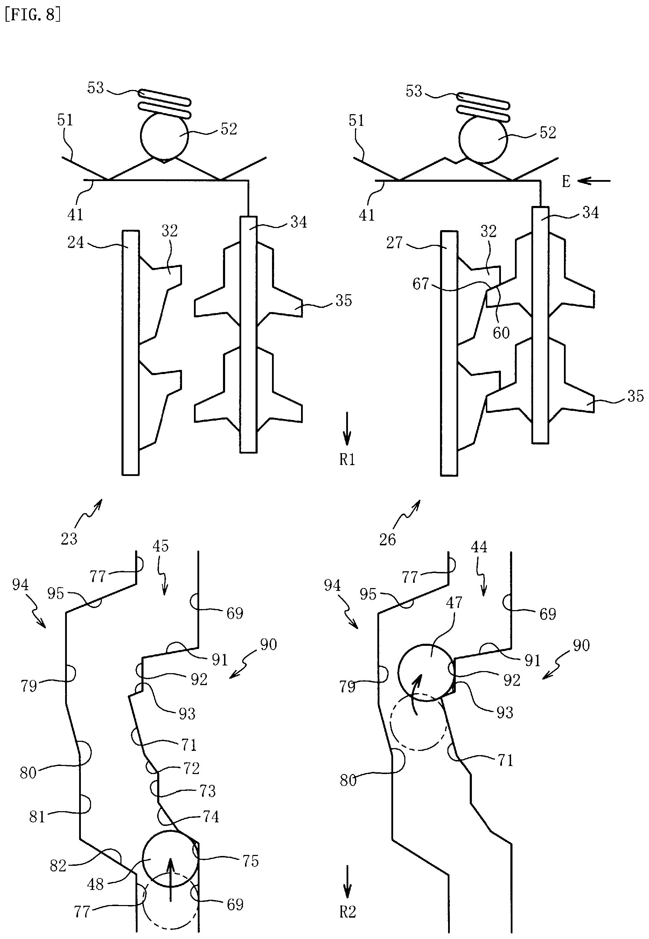

A second embodiment will be described by reference to FIGS. 8 and 9. According to the first embodiment, the first cam 68 and the second cam 76 are provided so that the first tooth 32 and the second tooth 35 of the fourth gear 23 engage when the first tooth 32 and the second tooth 35 of the fifth gear 26 disengage as the shift drum 43 rotates. According to the second embodiment, however, a first cam 90 and a second cam 94 are provided so that the first tooth 32 and the second tooth 35 of the fifth gear 26 disengage when the first tooth 32 and the second tooth 35 of the fourth gear 23 engage. The same elements as those of the first embodiment are designated by the same reference numerals and a description is omitted for simplicity.

FIG. 8 is a schematic diagram illustrating the transmission 10 according to the second embodiment at the beginning of a downshift. FIG. 9 is a schematic diagram illustrating the transmission 10 in process of a downshift. The first cam 90 and the second cam 94 are provided for the cam grooves 44 and 45 of the shift drum 43 (see FIG. 1), respectively.

As illustrated in FIG. 8, the engagement portions 47 and 48 engage in the cam grooves 44 and 45, respectively. When the shift drum 43 rotates, the first cam 90 and the second cam 94, provided inside the cam grooves 44 and 45, axially position the engagement portions 47 and 48 and the shift arms 40 and 41, respectively. The first cam 90 axially faces the second cam 94. The first cam 90 axially moves the engagement portions 47 and 48 so that the first tooth 32 and the second tooth 35 engage. The second cam 94 axially moves the engagement portions 47 and 48 so that the first tooth 32 and the second tooth 35 disengage.

The first cam 90 continuously includes the first plane 69, a ninth slope 91, a sixth plane 92, a tenth slope 93, the second slope 71, the third slope 72, the second plane 73, the fourth slope 74, the fifth slope 75, and the first plane 69 in order. The ninth slope 91, the sixth plane 92, the tenth slope 93, the second slope 71, the third slope 72, the second plane 73, the fourth slope 74, and the fifth slope 75 protrude axially referring to the first plane 69. The ninth slope 91 and the tenth slope 93 face opposite to the second slope 71, the third slope 72, the fourth slope 74, and the fifth slope 75 referring to the rotation direction. The pressure angle of the sixth plane 92 is almost 0°. The sixth plane 92 is provided at axially the same position as the part of the second slope 71 closest to the first plane 69. The pressure angle of the ninth slope 91 is larger than that of the tenth slope 93. The pressure angle of the tenth slope 93 is larger than the pressure angles of the second slope 71, the third slope 72, and the fourth slope 74.

The second cam 94 continuously includes the third plane 77, an eleventh slope 95, the fourth plane 79, the seventh slope 80, the fifth plane 81, the eighth slope 82, and the third plane 77 in order. The eleventh slope 95, the fourth plane 79, the seventh slope 80, the fifth plane 81, and the eighth slope 82 are axially depressed, referring to the third plane 77. The eleventh slope 95 faces opposite to the seventh slope 80 and the eighth slope 82, referring to the rotation direction. The pressure angles of the eleventh slope 95 and the eighth slope 82 are larger than the pressure angle of the seventh slope 80. The pressure angles of the eleventh slope 95 and the eighth slope 82 are larger than those of the second slope 71, the third slope 72, and the fourth slope 74. The fourth plane 79 is located in the axial direction of the ninth slope 91, the sixth plane 92, and the tenth slope 93. The first plane 69 is located in the axial direction of the eleventh slope 95.

When the shift drum 43 rotates as illustrated in FIG. 8, the engagement portion 47 of the fifth gear 26, having been positioned between the second slope 71 of the first cam 90 and the seventh slope 80 of the second cam 94, moves to touch the sixth plane 92 of the first cam 90. The engagement portion 48 of the fourth gear 23 touches the first plane 69 of the first cam 90. When coasting torque is transmitted from the idling gear 27 of the fifth gear 26 to the movable member 34, the fourth face 64 of the second tooth 35 is pressed against the second face 57 of the first tooth 32 to generate a thrust force that causes the movable member 34 to axially separate from the idling gear 27. The fifth portion 67 of the second tooth 35 touches the fifth portion 60 of the first tooth 32. The engagement portion 47 touches the sixth plane 92 of the first cam 90 to limit the axial movement of the movable member 34. Then, the engagement between the first tooth 32 and the second tooth 35 is maintained to transmit the coasting torque.

When the shift drum 43 further rotates as illustrated in FIG. 9, the engagement portion 48 of the fourth gear 23 is pushed by the first cam 90 to move axially. The engagement portion 47 of the fifth gear 26 leaves the sixth plane 92. Concerning the fourth gear 23, the second tooth 35 engages the first tooth 32 as the engagement portion 48 moves axially. The fifth gear 26 rotates faster than the fourth gear 23. When the first tooth 32 and the second tooth 35 of the fourth gear 23 engage, the fifth portion 60 of the first tooth 32 and the fifth portion 67 of the second tooth 35 for the fifth gear 26 press against each other to generate a thrust force that then disengages the first tooth 32 and the second tooth 35. Therefore, a seamless downshift is available.

While there has been described the present invention based on the embodiments, the invention is not limited to the embodiments. For example, it is possible to appropriately configure the number of gears of the transmission 10, the shapes of the cam grooves 44 and 45 provided for the shift drum 43, and the shapes of the first tooth 32 and the second tooth 35.

The embodiments have described the transmission 10 mounted on automobiles but are not limited thereto. It is possible to mount the transmission 10 on construction machines, industrial vehicles, and agricultural machines, for example. Also in such a case, the transmission 10 can prevent a loss of the transmission torque. As a result, it is possible to ensure steering stability of the downshift during cornering, and to eliminate idling of the drive shaft 11 to improve fuel consumption.

The embodiments have described the second portion 56 provided for the first face 54 of the first tooth 32 and the second portion 63 provided for the third face 61 of the second tooth 35 but are not necessarily limited thereto. It is possible to omit one of the second portions 56 and 63.

The embodiments have described the spring mechanism 50 including a first mechanism and a second mechanism. The first mechanism allows the spring 53 to press the ball 52 engaging with the recess 51 provided for the outer periphery of the shift arms 40, 41, and 42, and applies an axial force to the shift arms 40, 41, and 42. The second mechanism allows the spring 53a to press the ball 52a engaging with the recess 51a provided for the outer periphery of the shift drum 43 and applies a rotational force to the shift drum 43. However, the embodiments are not limited thereto. For example, it is possible to omit one of the first mechanism and the second mechanism.

Instead of or in addition to the first mechanism, it is possible to place a spring applying an axial elastic force to the shift forks between the shift arm 40 and the shift fork 37, between the shift arm 41 and the shift fork 38, and between the shift arm 42 and the shift fork 39. In this case, the spring applies an elastic force in the direction to disengage the first tooth 32 and the second tooth 35 via the shift forks 37, 38, and 39 as the shift arms 40, 41, and 42 axially move.

Instead of or in addition to the second mechanism, it is possible to use a spring-type brake motor as the actuator that rotationally drives the shift drum 43. In this case, also, the actuator spring applies a rotational force to the shift drum 43.

The embodiments have described the case of θ5 > 0°. Namely, the first portion 55 of the first tooth 32 inclines to approach the second face 57 toward the tooth root. The first portion 62 of the second tooth 35 inclines to approach the fourth face 64 toward the tooth root. However, the embodiments are not limited thereto. For example, θ5 = 0° may be available. Suppose the first portions 55 and 62 touch to transmit torque. Then, a resultant force is generated from the axial component of a force due to the torque and from the axial component of a frictional force generated between the first portions 55 and 62. It may be favorable that the resultant force does not act in a direction to separate the movable member 34 from the idling gears 24 and 27. If this condition is satisfied, the first portions 55 and 62 may incline in the opposite direction.

### EXPLANATION OF REFERENCE

10: transmission
11: drive shaft (shaft)
24,27: idling gear (gear)
32: first tooth
34: movable member
35: second tooth
54: first face
55: first portion
56: second portion
57: second face
58: third portion
59: fourth portion
60: fifth portion
61: third face
62: first portion
63: second portion
64: fourth face
65: third portion
66: fourth portion
67: fifth portion
P : plane

## Claims

1. A transmission (10) that selectively couples a gear (24) to a shaft (11), the gear (24) being provided with a first tooth (32) and placed on the shaft (11), the transmission (11) comprising:
an axially movable member (34) disposed on the shaft (11) so as to be incapable of rotation referring to said shaft (11) and provided with a second tooth (35) that is configured to engage the first tooth (32),
wherein the first tooth (32) includes a first face (54) facing one circumferential side and a second face (57) facing the other circumferential side;
wherein the second tooth (35) includes a third face (61) and a fourth face (64), the third face (61) facing at least part of the first face (54) when the movable member (34) axially moves and the first tooth (32) and the second tooth (35) engage, and the fourth face (64) facing at least part of the second face (57) when the movable member (34) axially moves and the first tooth (32) and the second tooth (35) engage;
wherein the first face (54) and the third face (61) include respectively a first portion (55,62) that is configured to transmit torque in a direction to press the first face (54) and the third face (61); and
wherein at least one of the first face (54) and the third face (61) includes a second portion (56,63) adjacent to the first portion (55,62) toward a tooth root; **characterized in that**
the second face (57) and the fourth face (64) include respectively a third portion (58,65), a fourth portion (59,66) adjacent to the third portion (58,65) toward a tooth tip, and a fifth portion (60,67) adjacent to the fourth portion (59,66) toward a tooth tip;
the second portion (56,63) is configured to generate a thrust force that axially separates the gear (24) and the movable member (34) according to torque in a direction to press the first face (54) and the third face (61), when the first tooth (32) and the second tooth (35) are engaged;
the first portion (55) of the first tooth (32) slopes to approach the second face (57) toward the tooth root, the first portion (62) of the second tooth (35) slopes to approach the fourth face (64) toward the tooth root, the second portion (56) of the first tooth (32) slopes to recede from the second face (57) toward the tooth root, the second portion (63) of the second tooth (35) slopes to recede from the fourth face (64) toward the tooth root, third portion (58) and the fifth portion (60) of the first tooth (32) slope to approach the first face (54) toward the tooth tip, the third portion (65) and the fifth portion (67) of the second tooth (35) slope to approach the third face (61) toward the tooth tip, the fourth portion (59) of the first tooth (32) couples the third portion (58) and the fifth portion (60) of the first tooth (32), and the fourth portion (66) of the second tooth (32) couples the third portion (65) and the fifth portion (67) of the second tooth (35);
the third portion (58,65) and the fifth portion (60,67) are configured to generate a thrust force that axially separates the gear (24) and the movable member (34) according to torque in a direction to press the second face (57) and the fourth face (64), when the first tooth (32) and the second tooth (35) are engaged; and
the angle θ1 between a plane (P) including the axis of the shaft (11) and the third portion (58,65) and the angle θ2 between the plane (P) and the fifth portion (60,67) are smaller than the angle θ3 between the plane (P) and the fourth portion (59,66).

2. The transmission (10) according to claim 1,
wherein the angle θ4 between the plane (P) and the second portion (56,63) is larger than the angles θ1 and θ2.

3. The transmission (10) according to claim 1 or 2,
wherein the angle θ1 and the angle θ2 are smaller than or equal to 20°

4. The transmission (10) according to any one of claims 1 through 3,
wherein the angle θ3 is larger than or equal to 70° and is smaller than or equal to 90°.

## Patentansprüche

1. Ein Getriebe (10), das selektiv ein Zahnrad (24) mit einer Welle (11) koppelt, wobei das Zahnrad (24) mit einem ersten Zahn (32) versehen und auf der Welle (11) angeordnet ist, wobei das Getriebe (11) umfasst:
ein axial bewegliches Element (34), das auf der Welle (11) so angeordnet ist, dass es sich in Bezug auf die Welle (11) nicht drehen kann, und das mit einem zweiten Zahn (35) versehen ist, der dazu konfiguriert ist, mit dem ersten Zahn (32) in Eingriff zu kommen,
wobei der erste Zahn (32) eine erste Fläche (54), die einer Umfangsseite zugewandt ist, und eine zweite Fläche (57) beinhaltet, die der anderen Umfangsseite zugewandt ist;
wobei der zweite Zahn (35) eine dritte Fläche (61) und eine vierte Fläche (64) beinhaltet, wobei die dritte Fläche (61) mindestens einem Teil der ersten Fläche (54) zugewandt ist, wenn sich das bewegliche Element (34) axial bewegt und der erste Zahn (32) und der zweite Zahn (35) in Eingriff stehen, und die vierte Fläche (64) mindestens einem Teil der zweiten Fläche (57) zugewandt ist, wenn sich das bewegliche Element (34) axial bewegt und der erste Zahn (32) und der zweite Zahn (35) in Eingriff stehen;
wobei die erste Fläche (54) und die dritte Fläche (61) jeweils einen ersten Abschnitt (55, 62) beinhalten, der dazu konfiguriert ist, ein Drehmoment in einer Richtung zu übertragen, um die erste Fläche (54) und die dritte Fläche (61) zu drücken; und
wobei mindestens eine der ersten Fläche (54) und der dritten Fläche (61) einen zweiten Abschnitt (56, 63) beinhaltet, der an den ersten Abschnitt (55, 62) in Richtung einer Zahnwurzel angrenzt; **dadurch gekennzeichnet, dass**
die zweite Fläche (57) und die vierte Fläche (64) jeweils einen dritten Abschnitt (58, 65), einen vierten Abschnitt (59, 66), der an den dritten Abschnitt (58, 65) in Richtung einer Zahnspitze angrenzt, und einen fünften Abschnitt (60, 67) beinhalten, der an den vierten Abschnitt (59, 66) in Richtung einer Zahnspitze angrenzt;
der zweite Abschnitt (56, 63) dazu konfiguriert ist, eine Druckkraft zu erzeugen, die das Zahnrad (24) und das bewegliche Element (34) gemäß dem Drehmoment in einer axialen Richtung trennt, um die erste Fläche (54) und die dritte Fläche (61) zu drücken, wenn der erste Zahn (32) und der zweite Zahn (35) in Eingriff stehen;
der erste Abschnitt (55) des ersten Zahns (32) zur zweiten Fläche (57) in Richtung der Zahnwurzel hin geneigt ist, der erste Abschnitt (62) des zweiten Zahns (35) zur vierten Fläche (64) in Richtung der Zahnwurzel hin geneigt ist, der zweite Abschnitt (56) des ersten Zahns (32) von der zweiten Fläche (57) in Richtung der Zahnwurzel weg geneigt ist, der zweite Abschnitt (63) des zweiten Zahns (35) von der vierten Fläche (64) in Richtung der Zahnwurzel weg geneigt ist, der dritte Abschnitt (58) und der fünfte Abschnitt (60) des ersten Zahns (32) zur ersten Fläche (54) in Richtung der Zahnspitze hin geneigt sind, der dritte Abschnitt (65) und der fünfte Abschnitt (67) des zweiten Zahns (35) zur dritten Fläche (61) in Richtung der Zahnspitze hin geneigt sind, der vierte Abschnitt (59) des ersten Zahns (32) den dritten Abschnitt (58) und den fünften Abschnitt (60) des ersten Zahns (32) verbindet, und der vierte Abschnitt (66) des zweiten Zahns (32) den dritten Abschnitt (65) und den fünften Abschnitt (67) des zweiten Zahns (35) verbindet;
der dritte Abschnitt (58, 65) und der fünfte Abschnitt (60, 67) dazu konfiguriert sind, eine Druckkraft zu erzeugen, die das Zahnrad (24) und das bewegliche Element (34) gemäß dem Drehmoment in einer Richtung axial trennt, um die zweite Fläche (57) und die vierte Fläche (64) zu drücken, wenn der erste Zahn (32) und der zweite Zahn (35) in Eingriff stehen; und
der Winkel θ1 zwischen einer Ebene (P), die die Achse der Welle (11) und den dritten Abschnitt (58, 65) beinhaltet, und der Winkel θ2 zwischen der Ebene (P) und dem fünften Abschnitt (60, 67) kleiner sind als der Winkel θ3 zwischen der Ebene (P) und dem vierten Abschnitt (59, 66).

2. Das Getriebe (10) nach Anspruch 1,
wobei der Winkel θ4 zwischen der Ebene (P) und dem zweiten Abschnitt (56, 63) größer ist als die Winkel θ1 und θ2.

3. Das Getriebe (10) nach Anspruch 1 oder 2,
wobei der Winkel θ1 und der Winkel θ2 kleiner oder gleich 20° sind.

4. Das Getriebe (10) nach einem der Ansprüche 1 bis 3,
wobei der Winkel θ3 größer oder gleich 70° und kleiner oder gleich 90° ist.

## Revendications

1. Transmission (10) qui couple sélectivement un engrenage (24) à un arbre (11), l'engrenage (24) étant pourvu d'une première dent (32) et placé sur l'arbre (11), la transmission (11) comprenant :
un élément axialement mobile (34) disposé sur l'arbre (11) de manière à être incapable de rotation par rapport audit arbre (11) et pourvu d'une deuxième dent (35) qui est configurée pour venir en prise avec la première dent (32),
où la première dent (32) comprend une première face (54) faisant face à un côté circonférentiel et une deuxième face (57) faisant face à l'autre côté circonférentiel,
où la deuxième dent (35) comprend une troisième face (61) et une quatrième face (64), la troisième face (61) faisant face à au moins une partie de la première face (54) lorsque l'élément mobile (34) se déplace axialement et la première dent (32) et la deuxième dent (35) viennent en prise, et la quatrième face (64) faisant face à au moins une partie de la deuxième face (57) lorsque l'élément mobile (34) se déplace axialement et la première dent (32) et la deuxième dent (35) viennent en prise,
où la première face (54) et la troisième face (61) comprennent respectivement une première portion (55, 62) qui est configurée pour transmettre un moment d'une force dans une direction pour presser la première face (54) et la troisième face (61), et
où au moins l'une de la première face (54) et de la troisième face (61) comprend une deuxième portion (56, 63) adjacente à la première portion (55, 62) vers une racine de dent, **caractérisé en ce que**
la deuxième face (57) et la quatrième face (64) comprennent respectivement une troisième portion (58, 65), une quatrième portion (59, 66) adjacente à la troisième portion (58, 65) vers une pointe de dent, et une cinquième portion (60, 67) adjacente à la quatrième portion (59, 66) vers une pointe de dent,
la deuxième portion (56, 63) est configurée pour générer une force de poussée qui sépare axialement l'engrenage (24) et l'élément mobile (34) selon un moment d'une force dans une direction pour presser la première face (54) et la troisième face (61) lorsque la première dent (32) et la deuxième dent (35) sont en prise,
la première portion (55) de la première dent (32) est inclinée pour s'approcher de la deuxième face (57) vers la racine de dent, la première portion (62) de la deuxième dent (35) est inclinée pour s'approcher de la quatrième face (64) vers la racine de dent, la deuxième portion (56) de la première dent (32) est inclinée pour s'éloigner de la deuxième face (57) vers la racine de dent, la deuxième portion (63) de la deuxième dent (35) est inclinée pour s'éloigner de la quatrième face (64) vers la racine de dent, la troisième portion (58) et la cinquième portion (60) de la première dent (32) sont inclinées pour s'approcher de la première face (54) vers la pointe de dent, la troisième portion (65) et la cinquième portion (67) de la deuxième dent (35) sont inclinées pour s'approcher de la troisième face (61) vers la pointe de dent, la quatrième portion (59) de la première dent (32) couple la troisième portion (58) et la cinquième portion (60) de la première dent (32), et la quatrième portion (66) de la deuxième dent (32) couple la troisième portion (65) et la cinquième portion (67) de la deuxième dent (35),
la troisième portion (58, 65) et la cinquième portion (60, 67) sont configurées pour générer une force de poussée qui sépare axialement l'engrenage (24) et l'élément mobile (34) selon un moment d'une force dans une direction pour presser la deuxième face (57) et la quatrième face (64) lorsque la première dent (32) et la deuxième dent (35) sont en prise, et
l'angle θ1 entre un plan (P) comprenant l'axe de l'arbre (11) et la troisième portion (58, 65) et l'angle θ2 entre le plan (P) et la cinquième portion (60, 67) sont inférieurs à l'angle θ3 entre le plan (P) et la quatrième portion (59, 66).

2. Transmission (10) selon la revendication 1,
où l'angle θ4 entre le plan (P) et la deuxième portion (56, 63) est supérieur aux angles θ1 et θ2.

3. Transmission (10) selon la revendication 1 ou 2,
où l'angle θ1 et l'angle θ2 sont inférieurs ou égaux à 20°.

4. Transmission (10) selon l'une quelconque des revendications 1 à 3,
où l'angle θ3 est supérieur ou égal à 70° et est inférieur ou égal à 90°.
